# EUROPÄISCHE PATENTSCHRIFT

(11) **EP 2 466 090 B1**
(45) Veröffentlichungstag und Bekanntmachung des Hinweises auf die Patenterteilung: **26.02.2014**
(21) Anmeldenummer: 11009806.8
(22) Anmeldetag: 13.12.2011
(51) Int. Cl.: F02B 33/44, F02B 37/007, F02M 35/10, F02M 35/02

(54) **Anordnung mit zwei voneinander unabhängigen Turbolader für Verbrennungskraftmaschine sowie Verfahren zum Betreiben zweier Turbolader**
Assembly with two independent turbochargers for combustion engines and method for operating two turbochargers
Agencement à deux turbosoufflantes indépendantes l'une de l'autre pour moteur à combustion interne et procédé de fonctionnement de deux turbosoufflantes

(30) Priorität: 17.12.2010 DE 102010054959
(43) Veröffentlichungstag der Anmeldung: 20.06.2012
(73) Patentinhaber: Audi AG, 85045 Ingolstadt (DE)
(72) Erfinder: Adamol, Abdullah, 74072 Heilbronn (DE); Schwämmle, Heiko, 74254 Offenau (DE)
(74) Vertreter: Lehle, Josef

(56) Entgegenhaltungen:
- EP-A2- 1 643 102
- WO-A1-2004/013472
- JP-U- H0 589 863
- US-A- 5 136 988

## Beschreibung

Die Erfindung betrifft eine Anordnung mit einer Verbrennungskraftmaschine, der zwei voneinander unabhängige Turbolader zugeordnet sind. Typischerweise beaufschlagt jeder Turbolader eine Gruppe von Brennkammern mit Ladeluft. Die Gruppe kann insbesondere eine Zylinderbank sein. Den Turboladern wird über eine Reinluftleitung in der Anordnung gefilterte Luft zugeführt, wobei für jeden Turbolader und damit jede Reinluftleitung ein gesonderter Reinluftfilter vorgesehen sein kann.

Bei einer Anordnung der genannten Gattung ist es aus der DE 3 633 405 C2, der DE 10 2005 054 249 A1 und der DE 10 2007 014 319 A1 jeweils bekannt, die Luftleitungen auf der Ladeluftseite, also in Strömungsrichtung hinter den jeweiligen Turboladern, miteinander zu verbinden. Dies kann insbesondere zum Zwecke eines Druckausgleichs geschehen.

Ferner offenbart die US 5,136,988 eine Einlassanordnung zur Versorgung von Zylinderbänken in einer Verbrennungskraftmaschine mit Luft, mit einer ersten Luftversorgungseinrichtung, welche einen ersten Luftfilter umfasst, und mit einer zweiten Luftversorgungseinrichtung, welche einen zweiten Luftfilter umfasst. Über die erste Luftversorgungseinrichtung wird eine erste der Zylinderbänke mit Luft versorgt, während über die zweite Luftversorgungseinrichtung eine zweite der Zylinderbänke mit Luft versorgt wird. Dabei führen jeweilige Reinluftleitungen der Luftversorgungseinrichtungen von den jeweiligen Luftfiltern zu jeweiligen Abgasturboladern der Luftversorgungseinrichtungen. Stromab der jeweiligen Luftfilter und stromauf der jeweiligen Abgasturbolader ist dabei eine Ausgleichsleitung vorgesehen, über welche die Reinluftleitungen stromab der Luftfilter und stromauf der Abgasturbolader fluidisch miteinander verbunden sind.

Die JP H05 89863 U offenbart eine Anordnung mit einer Verbrennungskraftmaschine mit zwei voneinander unabhängigen Turboladern, denen jeweils über eine Reinluftleitung mit Hilfe eines jeweiligen Luftfilters gefilterte Luft zuführbar ist. Dabei sind die Reinluftleitungen stromauf des jeweiligen Abgasturboladers und stromab des jeweiligen Reinluftfilters fluidisch miteinander verbunden.

Des Weiteren geht aus der WO 2004/013472 A1 eine Brennkraftmaschine mit einem ersten und zweiten Abgasturbolader zur Aufladung der Brennkraftmaschine hervor. Jeder Abgasturbolader umfasst ein Verdichterrad und ein Turbinenrad, welche um eine gemeinsamen Laderachse rotieren. Es ist eine Abgas-Zuführung zum ersten und zweiten Abgasturbolader vorgesehen, wobei beide Abgasturbolader parallel vom Abgas durchströmt werden. Es ist ein Trägergehäuse zur Aufnahme der beiden Abgasturbolader sowie ein Sammelrohr zur Zusammenführung der Abgasströme nach den beiden Abgasturboladern und eine gemeinsamen Abgas-Abführung vorgesehen. Die beiden Abgasturbolader werden dabei in der Art angeordnet, dass die beiden Laderachsen in einem Winkelbereich zwischen 55 bis 100° zueinander stehen und in der gleichen Ebene liegen.

Schließlich ist aus der EP 1 643 102 A2 eine Verbrennungskraftmaschine mit zwei parallel zueinander geschalteten, das heißt zwei unabhängigen Abgasturboladern bekannt, welche zum Versorgen der Verbrennungskraftmaschine mit verdichteter Luft verwendet werden.

Turbolader unterliegen einem starken Verschleiß. Verschlissene Bauteile müssen insbesondere paarweise ausgetauscht werden. Dies geht mit hohen Kosten einher.

Es ist Aufgabe der vorliegenden Erfindung, den Aufwand und die Kosten zu verringern.

Die Aufgabe wird durch eine Anordnung mit den Merkmalen gemäß Patentanspruch 1 in einem Aspekt der Erfindung gelöst.

Die erfindungsgemäße Anordnung ist durch einen gemeinsamen Reinluftfilter, von dem Reinluft in die jeweiligen Reinluftleitungen gelangt, gekennzeichnet.

Bei der Erfindung erfolgt der Druckausgleich in Strömungsrichtung der Luft vor den Turboladern. Dies beruht auf der Erkenntnis, dass ein unterschiedlicher Druck in den unterschiedlichen Reinluftleitungen mit einer unterschiedlichen Leistung der Turbolader einhergeht, und dies führt zu einer unterschiedlichen thermischen Belastung und einem unterschiedlichen Verschleiß. Da ein Druckunterschied insbesondere durch Formunterschiede zwischen den beiden Reinluftleitungen dauerhaft bestehen kann, wird der eine Turbolader mehr verschlissen als der andere. Daher kann es dazu kommen, dass der eine Turbolader frühzeitig ausgetauscht werden muss, dass man dann aber gleichzeitig den zweiten Turbolader mit austauschen würde, der noch gar nicht verschlissen ist. Durch die erfindungsgemäße Maßnahme eines Druckausgleichs wird der Verschleiß insgesamt verringert und zudem gleichmäßiger gestaltet. Muss der eine Turbolader wegen Verschleißes ausgetauscht werden, so kann gleich der andere Turbolader mit ausgetauscht werden, und der Gesamtaufwand ist geringer.

Bei einer bevorzugten Ausführungsform der Erfindung ermöglicht die Einrichtung zum Bewirken eines Druckausgleichs einen Übertritt von Luft von einer der beiden Reinluftleitungen (nämlich dort, wo der höhere Luftdruck herrscht) zu der anderen Reinluftleitung (in der der niedrigere Luftdruck herrscht). Ein Druckausgleich kann besonders einfach durch die Luft selbst erfolgen. Insbesondere lässt sich die Einrichtung dann besonders leicht bauen.

In dem einen Aspekt der Erfindung umfasst die Einrichtung zum Bewirken eines Druckausgleichs eine Fluidleitung. Diese kann insbesondere derart gestaltet sein, dass bei den typischen Drehzahlen des Turboladers und den typischen Druckdifferenzen Druckwellen in der Fluidleitung auftreten oder sich ein Druckgradient einstellen kann. Alternativ hierzu kann die Einrichtung zum Bewirken eines Druckausgleichs einen Luftsammelbehälter umfassen, in dem im Verhältnis zu der bisher genannten Fluidleitung eine größere Luftmenge beinhaltet sein kann derart, dass der Druckausgleich durch einen Luftmassenstrom (im laminaren oder gegebenenfalls auch turbulenten Fluss) erfolgen kann.

Nachfolgend wird eine bevorzugte Ausführungsform der Erfindung unter Bezugnahme auf die Zeichnung beschrieben, in der
- Fig. 1: eine Anordnung mit einer Verbrennungskraftmaschine mit zwei voneinander unabhängigen Turboladern gemäß dem Stand der Technik veranschaulicht;
- Fig. 2: eine solche Anordnung gemäß einer ersten Ausführungsform der Erfindung veranschaulicht; und
- Fig. 3: eine solche Anordnung gemäß einer zweiten Ausführungsform der Erfindung veranschaulicht.

Eine Verbrennungskraftmaschine weist zwei Zylinderbänke 10a, 10b auf, die jeweils vier Zylinder 12a bzw. vier Zylinder 12b aufweisen. Der ersten Zylinderbank 10a ist ein Turbolader 14a zugeordnet, der zweiten Zylinderbank 10b ein Turbolader 14b. Aufgabe des Turboladers ist es, gefilterte Luft (Reinluft) in die Zylinder zu drücken und hierbei den Druck des aus den Zylindern entweichenden Abgases zu nutzen. Hierzu ist zu jedem Turbolader 14a, 14b ein Reinluftfilter 16a, 16b vorgesehen, dem eine Reinluftleitung 18a, 18b nachgeordnet ist. Die von dem jeweiligen Turbolader 14a, 14b komprimierte Luft (Ladeluft) wird dann über Leitungen 20a bzw. 20b den Zylindern 12a bzw. 12b zugeführt. Eine Abgasrückleitung 22a bzw. 22b führt das Abgas den Turboladern 14a bzw. 14b zu.

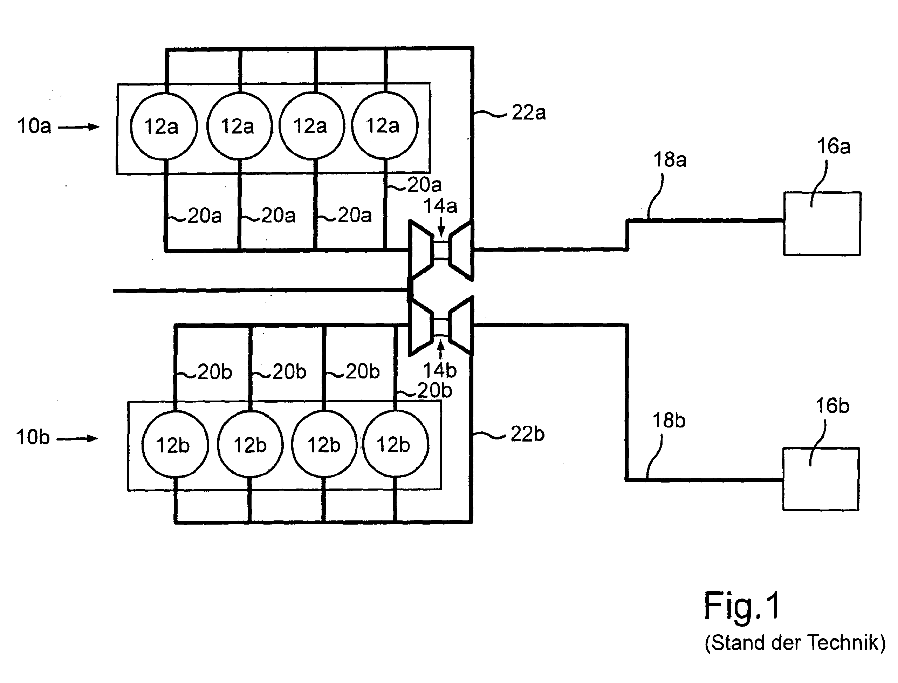

Gemäß dem Stand der Technik arbeiten die beiden Turbolader 14a, 14b völlig unabhängig voneinander, und es gibt keine Verbindung zwischen den Reinluftleitungen 18a und 18b. Nun kann es sein, dass die eine Reinluftleitung 18b aus Gründen des Bauraums anders geformt ist als die andere Reinluftleitung 18a, insbesondere, wie in Fig. 1 gezeigt, länger ist. Dann unterscheiden sich die Luftdrücke der Reinluft in den beiden Reinluftleitungen 18a, 18b voneinander, beispielsweise ist der Luftdruck in der Reinluftleitung 18a kleiner als in der Reinluftleitung 18b. Durch den niedrigeren Luftdruck muss der Turbolader 14a mehr Leistung aufbringen und unterliegt daher einem höheren Verschleiß als der Turbolader 14b. Der Turbolader 14a muss daher früher ausgetauscht werden, es muss also zwei Vorgänge des Austausches geben. Gegebenenfalls wird man den Turbolader 14b sogar gleichzeitig austauschen, obwohl er noch nicht das Ende seiner Betriebslebensdauer erreicht hat.

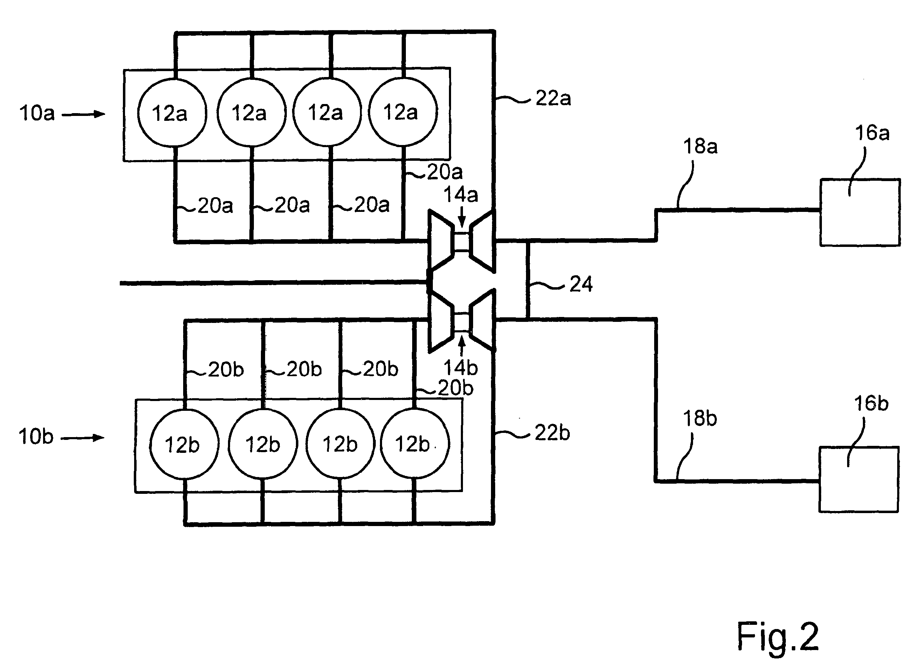

Im Rahmen der Erfindung wird nun ein Druckausgleich zwischen der Reinluft in der Reinluftleitung 18a und der Reinluft in der Reinluftleitung 18b bewirkt. Bei der ersten Ausführungsform gemäß Fig. 2 ist ein so genanntes Übersprechrohr 24 bereitgestellt, das die beiden Reinluftleitungen 18a und 18b miteinander koppelt. Das Rohr schafft eine fluidische Verbindung zwischen den beiden Reinluftleitungen 18a, 18b, wobei vorliegend insbesondere ein Druckausgleich durch Druckwellen erfolgen soll. Diese können sich insbesondere als stehende Welle in dem Übersprechrohr 24 ausbilden.

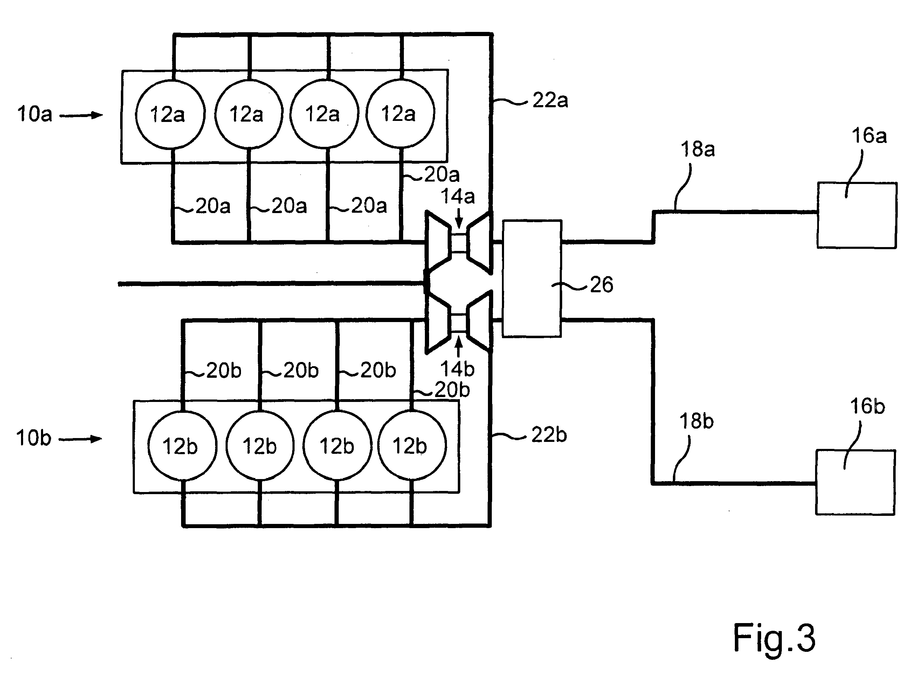

Alternativ hierzu ist es möglich, wie bei der zweiten Ausführungsform gemäß Fig. 3 vorgesehen, einen Luftsammelbehälter 26 bereitzustellen, der einen derart großen Aufnahmeraum aufweist, dass Luft laminar (oder gegebenenfalls auch turbulent) von der Reinluftleitung 18b zur Reinluftleitung 18a strömen kann.

Durch den Druckausgleich vermittels des Übersprechrohrs 24 bzw. des Luftsammelbehälters 26 ist gewährleistet, dass die beiden Turbolader 14a, 14b mit demselben Druck beaufschlagt werden und daher einem vergleichbaren Verschleiß unterliegen, sodass sie mehr oder weniger gleichzeitig das Ende ihrer Betriebslebensdauer erreichen und gleichzeitig ausgetauscht werden können, ohne dass Restbetriebslebensdauer eines der Turbolader bei dem Austausch verloren geht.

Anstelle zweier gesonderter Reinluftfilter 16a, 16b ist erfindungsgemäß ein gemeinsamer Reinluftfilter vorgesehen, von dem Reinluft in die jeweiligen Reinluftleitungen gelangt.

## Patentansprüche

1. Anordnung mit einer Verbrennungskraftmaschine mit zwei voneinander unabhängigen Turboladern (14a, 14b), denen jeweils über eine Reinluftleitung (18a, 18b) mit Hilfe eines Reinluftfilters (16a, 16b) gefilterte Luft zuführbar ist, und mit einer Einrichtung (24, 26) zum Bewirken eines Druckausgleichs zwischen der Luft in den beiden Reinluftleitungen,
**dadurch gekennzeichnet, dass**
ein gemeinsamer Reinluftfilter vorgesehen ist, von dem Reinluft in die jeweiligen Reinluftleitungen (18a, 18b) gelangt.

2. Anordnung nach Anspruch 1,
**dadurch gekennzeichnet, dass**
die Einrichtung zum Bewirken eines Druckausgleichs einen Übertritt von Luft von einer der beiden Reinluftleitungen (18b) zu der anderen Reinluftleitung (18a) ermöglicht.

3. Anordnung nach Anspruch 2,
**dadurch gekennzeichnet, dass**
die Einrichtung zum Bewirken eines Druckausgleichs eine Fluidleitung (24) umfasst.

4. Anordnung nach Anspruch 2,
**dadurch gekennzeichnet, dass**
die Einrichtung zum Bewirken eines Druckausgleichs einen Luftsammelbehälter (26) umfasst.

## Claims

1. Assembly comprising an internal combustion engine which comprises two mutually independent turbochargers (14a, 14b), to each of which air filtered using a clean-air filter (16a, 16b) can be fed via a clean-air line (18a, 18b), and comprising a device (24, 26) for bringing about a pressure compensation between the air in the two clean-air lines, **characterised in that**
a common clean-air filter is provided, from which clean air enters the respective clean-air lines (18a, 18b).

2. Assembly according to claim 1,
**characterised in that**
the device for bringing about a pressure compensation makes it possible for air to pass from one of the two clean-air lines (18b) to the other clean-air line (18a).

3. Assembly according to claim 2,
**characterised in that**
the device for bringing about a pressure compensation comprises a fluid line (24).

4. Assembly according to claim 2,
**characterised in that**
the device for bringing about a pressure compensation comprises an air storage tank (26).

## Revendications

1. Aménagement avec un moteur à combustion interne comportant deux turbosoufflantes (14a, 14b) indépendantes l'une de l'autre, auxquelles peut être acheminé, respectivement, via une conduite d'air pur (18a, 18b), de l'air filtré au moyen d'un filtre d'air pur (16a, 16b), et avec un dispositif (24, 26) pour assurer une compensation de pression de l'air entre les deux conduites d'air pur,
**caractérisé en ce que**
il est prévu un filtre d'air pur commun par lequel de l'air pur parvient dans les conduites d'air pur respectives (18a, 18b).

2. Aménagement selon la revendication 1,
**caractérisé en ce que**
le dispositif permettant d'assurer une compensation de pression permet un transfert d'air de l'une des deux conduites d'air pur (18b) dans l'autre conduite d'air pur (18a).

3. Aménagement selon la revendication 2,
**caractérisé en ce que**
le dispositif permettant d'assurer une compensation de pression comprend une conduite de fluide (24).

4. Aménagement selon la revendication 2,
**caractérisé en ce que**
le dispositif permettant d'assurer une compensation de pression comprend un réceptacle collecteur d'air (26).
